# EUROPEAN PATENT APPLICATION

(11) **EP 0 998 147 A1**
(43) Date of publication of application: **03.05.2000**
(21) Application number: 99120834.9
(22) Date of filing: 25.10.1999
(51) Int. Cl.: H04N 7/26, H04N 7/24, H04N 5/00, G11B 27/28, G11B 27/32

(54) **Moving picture coding/decoding apparatus generating additional indexing information**

(30) Priority: 26.10.1998 JP 30349798
(71) Applicant: HITACHI, LTD., Chiyoda-ku, Tokyo (JP)
(72) Inventor: Tanaka, Eiichi, Yokohama-shi (JP); Tsuboi, Yukitoshi, Yokohama-shi (JP); Arai, Hideo, Yokohama-shi (JP); Motosu, Akira, Yokohama-shi (JP); Nishimura, Takashi, Yokohama-shi (JP)
(74) Representative: Altenburg, Udo, Dipl.-Phys.

(57) **Abstract**

A moving picture coding/decoding apparatus capable of rapidly finding out a content of recorded moving picture data without completely decoding this moving-picture data content is constructed of an image coding/decoding unit (12) for coding/decoding a picture signal containing moving-picture information, a storage control unit (15), and a storage unit (16). In a small image generating unit (13), reduced resolution image signal (namely, "small image data") for indexing the original image signal is generated by sampling the image signal, or cutting out a portion of an image formed by the picture signal. This small image data is stored via the storage control unit (15) into the storage unit (16), while this small image data is correlated with the decoded image data obtained from the image coding/decoding unit (12). A selection is made of any one of the small image data read from the storage unit (16) and the restored image data derived from the image coding/decoding unit (12). Then, the selected image is displayed.

## Description

### BACKGROUND OF THE INVENTION

The present invention generally relates to a video appliance such as an electronic camera equipped with electronic imaging means, recording means, and video display means, or output means. More specifically, the present invention is directed to a moving picture coding/decoding apparatus equipped with means for simply finding out an outline of recorded video information in addition to the above-described various means.

As described in, for instance, Japanese Patent Disclosure No. Hei-4-506144 entitled "ELECTRONIC TYPE STILL IMAGE CAMERA EQUIPPED WITH MULTI-MODE TYPE STORAGE DEVICE FOR FULL AND REDUCED RESOLUTION IMAGES" disclosed on October 22, 1992, the conventional image coding/decoding apparatuses are directed to still images. More specifically, while a high resolution image and reduced resolution images indicative of outlines of this high resolution image are separately produced/stored, since this high resolution image is related to the respective reduced resolution images, when a user wants to find out a content of an image, the user observes the reduced resolution images and can immediately access to a subject image.

An outline of an image may be sufficiently found out by observing a reduced resolution image for indicating this outline. Also, a reduced resolution image may be converted into such an image format easily outputted on a receiver and the like, as compared with a high resolution image. As a consequence, the high resolution image having a larger data amount may be displayed without coding this high resolution image since the reduced resolution images are displayed.

As previously explained, when the storage content is found out in the conventional image coding/decoding apparatus, since the thumbnail data is displayed, the time required to produce such thumbnail data can be shortened, as compared with the time required to demodulate the original image data. In this conventional image coding/decoding apparatus, both the original image data and the thumbnail data are produced, and then the thumbnail data are separately stored in relation to the original image data. The thumbnail data are formed by reducing the resolution of this original image data and indicate the outline thereof.

However, these conventional image coding/decoding techniques are directed only to such still images, but not completely directed to moving pictures.

On the other, in another conventional method for storing the thumbnail data as such a file independent from another different file for the original image data, even when a change occurs in the above-described relationship between the original image data and the thumbnail data during the data edit operation after the data storing process, the thumbnail data cannot be correctly displayed when the content of this original image data is wanted to be found out. This problem may also occur when the image data is produced by using other conventional techniques.

Furthermore, in the case that a complex image is used, an outline of this complex image can be hardly grasped from an image having reduced resolution.

### SUMMARY OF THE INVENTION

An object of the present invention is to provide an apparatus capable of immediately finding out an original image containing recorded moving-picture information.

Another object of the present invention is to provide such a moving picture coding/decoding apparatus capable of simply finding out an outline of recorded image information, while a small image of a moving picture related to an original image is produced, even when there is a change in the relationship between the original image data and the small image data, and/or recorded image data which are produced by another apparatus, which is caused by the edit operation after these image data have been recorded.

In a moving picture coding/decoding apparatus according to an aspect of the present invention, an original moving picture signal is coded and the coded original image (moving picture) data is saved. At the same time, small image data, or thumbnail data related to this original moving picture signal is produced. In order that even when there is a change in a relationship between the original image data and the small image data while the image data is edited after being saved, any user can find out the content of this original moving picture by using the small image (moving picture), the small image data is merged into the original image data and then the merged original image data (namely, small image data is contained in original image data) is saved. In other words, this small image data is not saved as a file independent from another file of the original image data.

Also, in the moving picture coding/decoding apparatus according to another aspect of the present invention, while small image data is saved as a file independent from another file of original image data, when the relationship between the small image data and the original image data is changed, or when there is one original image data formed by other apparatus (namely, no small image data is formed), such small image data related to this original image data is newly produced, so that this newly produced small image data may be related to the original image data.

Furthermore, in a moving picture coding/decoding apparatus according to another aspect of the present invention, not only a reduced resolution image indicative of an outline of an overall image is saved, but also a partial image is saved as small image data, and this partial image corresponds to an image within an original image, which is arbitrarily designated by a user. In a specific case, a featured image portion appearing on the original image is saved as small image data. As a consequence, the content of the featured partial image can be easily grasped, or found out, as compared with such a case that the overall reduced resolution image is formed as the small image.

### BRIEF DESCRIPTION OF THE DRAWINGS

A better understanding of the present invention is achieved by reading a detailed description in conjunction with the accompanying drawing, in which:
Fig. 1A is a schematic block diagram for representing an arrangement of a moving picture coding/decoding apparatus according to a first embodiment of the present invention;
Fib. 1B is an illustration for indicating "merging" of small image data, which may be applied to any of embodiments according to the present invention;
Fig. 2 is a schematic block diagram for showing an arrangement of a moving picture coding/decoding apparatus according to a second embodiment of the present invention;
Fig. 3 is a schematic block diagram for indicating an arrangement of a moving picture coding/decoding apparatus according to a modification of the above-described second embodiment;
Fig. 4 is a schematic block diagram for showing an arrangement of a moving picture coding/decoding apparatus according to a third embodiment of the present invention;
Fig. 5 is an explanatory diagram for explaining a relationship between display screens of the moving picture coding/decoding apparatus according to the third embodiment;
Fig. 6 is an explanatory diagram for explanatorily indicating a time divisional display of the moving picture coding/decoding apparatus according to the third embodiment;
Fig. 7 is a schematic block diagram for showing an arrangement of a moving picture coding/decoding apparatus according to a fourth embodiment of the present invention;
Fig. 8 is an explanatory diagram for explanatorily indicating an image example of the moving picture coding/decoding apparatus according to the above-described fourth embodiment; and
Fig. 9 is a schematic block diagram for showing an arrangement of a moving picture coding/decoding apparatus according to a fifth embodiment of the present invention.

### DETAILED DESCRIPTION OF EMBODIMENTS

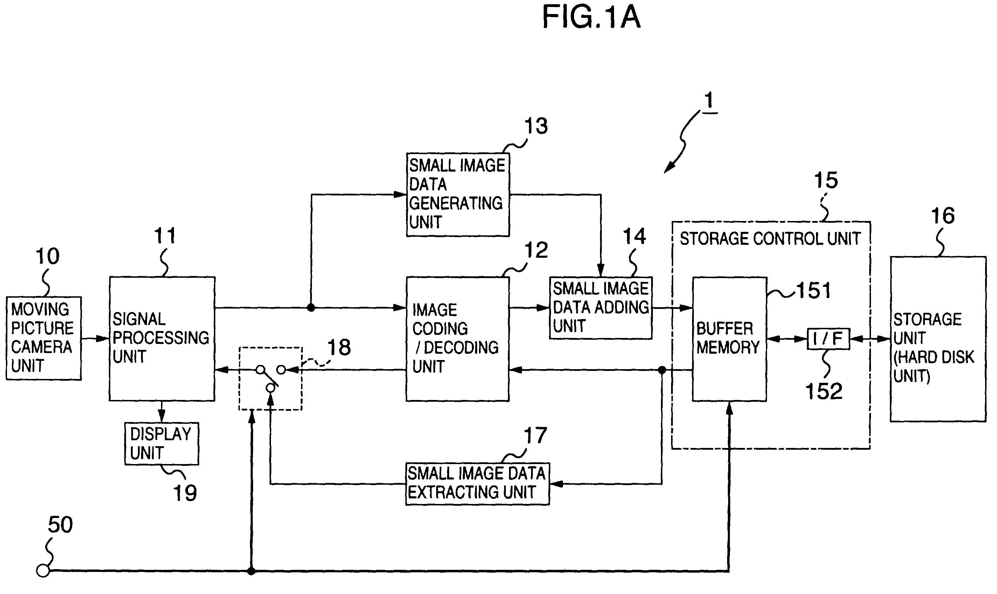

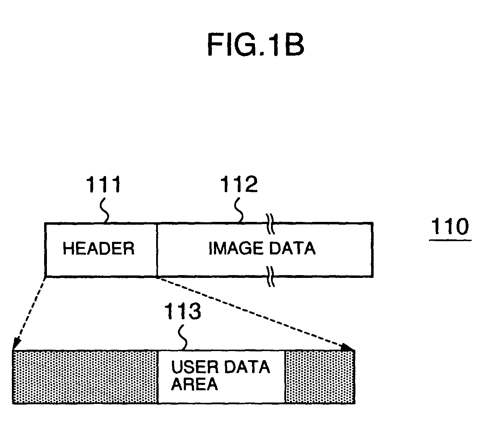

Referring now to Fig. 1A and Fig. 1B, a description is made of a moving picture coding/decoding apparatus 1 according to a first embodiment of the present invention.

Fig. 1A is a schematic block diagram for representing an arrangement of a moving picture coding/decoding apparatus 1 according to a first embodiment of the present invention.

The moving picture coding/decoding apparatus 1 contains a signal processing unit 11 for receiving an output signal derived from a moving picture camera unit 10, an image coding/decoding unit 12 into which an original image (picture) signal outputted from the signal processing unit 11 is supplied, a small image data generating unit 13, and a small image data adding unit 14. Also, this moving picture coding/decoding apparatus 1 further includes a storage control unit 15, a storage unit 16, a small image data extracting unit 17, and a selection switch 18.

The storage control unit 15 contains a buffer memory 15, and an interface unit 152.

The moving picture camera unit 10 is constructed of a CCD (charge-coupled device) camera, and sends out moving picture data.

The signal processing unit 11 converts the moving picture data sent from the moving picture camera unit 1 into a digital picture signal, and also converts a digital picture signal into such a signal suitable for a display unit 19 while an image reproducing operation is carried out.

The image coding/decoding unit 12 codes the digital picture signal sent from the signal processing unit 11 in accordance with the coding system such as the MPEG system, and furthermore decodes a picture signal which has been coded by way of the above-explained coding system and is read out from the storage unit 16.

The function of the small image data generating unit 13 is as follows: That is, digital picture signal (original image signal) sent from the signal processing unit 11 is sampled so as to generate a reduced resolution image signal (namely, "small image data"). This reduced resolution image signal is related to the above-explained original image signal. In other words, this reduced resolution image signal indexes the original image signal. The small image data is continuously performed, or carried out in a time interval.

The small image data adding unit 14 owns the following function: That is, the reduced resolution image signal (namely, small image data) sent from the small image data producing unit 13 is added to a coded image signal supplied from the image coding/decoding unit 12. Then, the resulting picture signal is recognized as a small-image-data-involved coded image signal.

The storage control unit 15 is provided with a buffer memory 151 and an interface unit 152, and also controls a storage position of small-image-involved coded image data within the storage unit 16.

The buffer memory 151 temporarily saves the coded image signal supplied from the small image data adding unit 14.

The interface unit 152 corresponds to a means for interfacing between the buffer memory 151 and the storage unit 16. The interface unit 152 owns a simple logic circuit, and also the below-mentioned function: When small image data is added to a coded image signal, a small-image-data-contained coded image signal (data) is stored at a specific position of the storage unit 16.

The storage unit 19 is constructed of, for instance, a hard disk unit (HDD), and stores thereinto the coded image signal to which the reduced resolution image signal (small image data) sent via the interface unit 152 is added. This coded image signal corresponds to the small-image-data-contained coded image signal.

The small image data extracting unit 17 extracts the reduced resolution image signal (small image data) which is added to the coded image signal read out from the storage unit 17.

The selection switch 18 selects any one of the image signal produced by decoding the coded image signal and the reduced resolution image signal from the reproduced image signals which are read out from the storage unit 16.

The display unit 19 is arranged by a monitor TV and the like, and displays thereon an image.

A mode change signal 50 corresponds to an externally settable signal, and also corresponds to a mode change control signal for switching operation modes of the buffer memory 151 and the selection switch 18.

In the case that a moving picture is stored by way of coding operation, the moving picture imaged by the moving picture camera unit 10 such as a CCD camera is converted into a digital picture signal by the signal processing unit 11, and then, this digital picture signal is entered into both the image coding/decoding unit 12 and the small image data generating unit 13. The digital picture signal is converted by the image coding/decoding unit 12 into coded image data which corresponds to a coded image signal which has been coded.

It should be noted that as the coding technique introduced in this embodiment, the MPEG standard system is employed. Coded data of a moving picture constituted by a series of frames is arranged by an intra-frame coded I picture, an inter-frame forward prediction coded P picture, and further an inter-frame bidirectional prediction coded B picture.

In the small image data generating unit 13, pixels are sampling-processed (thinning-processed) from the entered digital picture signal so as to produce small image data whose resolution is reduced.

The small image data adding unit 14 merges the small image data into the coded data in an arbitrary frame interval (for instance, from interval between I pictures corresponding to intra-frame coded image of MPEG system). As indicated in Fig. 1B, coded data 110 contains a header 111 and image data 112. This header 111 shows sequence information of the coded data 110. The place where the "small image data is merged" is a user data region 113 which is formed in the header 111 and may be freely used by a user. The coded data to which the small image data is added is temporarily saved in the buffer memory 151.

The buffer memory 151 writes the coded data via the interface unit 152 into the storage unit which is indicated as the hard disk unit 16 in this embodiment.

At this time, the interface unit 152 is operated in such a manner that the coded picture data to which the small image data has been added (namely, small-image-data-contained coded image data) is stored at a predetermined position, or at a position defined by a predetermine rule within the hard disk unit 16.

Alternately, this interface unit 152 may be operated in such a manner that such data is recorded on a predetermined sector formed in the hard disk unit, and this data indicates a recording position (sector) or the picture to which the small image data has been added.

Although the hard disk unit is employed as the storage means in this embodiment, this sector indicating data may be similarly recorded on a preselected position within another storage means even when the hard disk unit is replaced by this storage means.

Since this moving picture coding/decoding apparatus is controlled in accordance with the above-explained control manner, the storage position of the small image data can be readily grasped during the reproducing operation.

On one hand, when a moving picture is reproduced by way of the decoding operation, a process operation is carried out along a flow direction opposite to that executed when the moving picture is coded. That is, the coded data saved in the hard disk unit 16 is read via the interface unit 152 into the buffer memory 151.

In such a case that an original moving picture is outputted, when the selection switch 18 is set by using the mode change signal 50 set by the user to the side of the image coding/decoding unit 12, the buffer memory 151 is operated in such a manner that the stored coded data are sequentially read out from the hard disk unit 16, the coded data is decoding-processed by the image coding/decoding unit 12, and then, the reproduced image signal is supplied via the selection switch 18 to the signal processing unit 11.

On the other hand, in the case that small image data corresponding to a reduced resolution image signal is wanted to be outputted when the selection switch 18 is set by using the mode change signal 50 set by the user to the output side of the small image extracting unit 17, the buffer memory 151 is operated in such a manner that only the decoded data equipped with the small image data is read out from the hard disk unit 16, and then, the small image data which has been extracted from the decoded data by the small image extracting unit 17 is supplied via the selection switch 18 to the signal processing unit 11.

As previously explained, since the coded picture data to which the small image has been added is recorded at a predetermined position, or at a position defined in accordance with a predetermined rule, even when the frame intervals between the successive pictures to which the small image data are added are spaced from each other, the coded picture data can be immediately read.

It should be noted that while the selection switch 18 is operated in conjunction with the operation of the buffer memory 151, both the selection switch 18 and the buffer memory 151 are controlled at the same time in response to the mode change signal 50 set by the user.

The signal processing unit 11 modulates the reproduced image signal selected by the selection switch 18 so as to obtain such an image signal adapted to a preselected standard system, for example, the NTSC system, and thereafter, outputs this modulated image signal to the display unit 19 such as a monitor TV.

When a user finds out a content of an image, the user can sufficiently find out this image content by observing a small image indicative of an outline of this image. As a consequence, the user sets the selection switch 18 to acquire the small image data of the small image data extracting unit 17. Since the dimension of the small image is smaller than that of the original moving picture, time required for performing the coding/decoding operations of the small image data from the hard disk unit 16 to the display unit 19 may be shortened, as compared with that for the original image data.

The small image data generated in the small data generating unit 13 may be produced in an arbitrary frame interval. For instance, when one frame of I picture to which small image data is added is present every time 15 frames are represented, this small image may become such a moving picture fast-fed 15 times higher than the normal reproducing time for the original moving picture. As a result, time required when the user finds out the content of this small image can be largely shortened.

Also, since such a small image of a display screen instantaneously designated by a user is produced, a reduced resolution still image of a specific display screen (specific frame) contained in a moving picture may be produced as a small image. At this time, since the frame to which the small image data is added is commenced to be processed as a head frame by the coding/decoding operations for the original moving image, the small image data may be alternatively used as a bookmark appearing in the moving picture.

Also, when the small image data generating unit 13 is additionally provided with an image coding means (coding function) and also the small image data extracting unit 17 is additionally provided with an image decoding means (decoding function), the small image data which is added to the coded data may be coded/decoded. This technical modification may be similarly applied to the below-mentioned fourth and fifth embodiments.

Furthermore, since a data amount of small image data is smaller than that of an original moving picture, time required to code/decode this small image data is sufficiently shortened, and the data amount which is increased since the small image data is added may be furthermore suppressed to a small amount, while the small image data is coded.

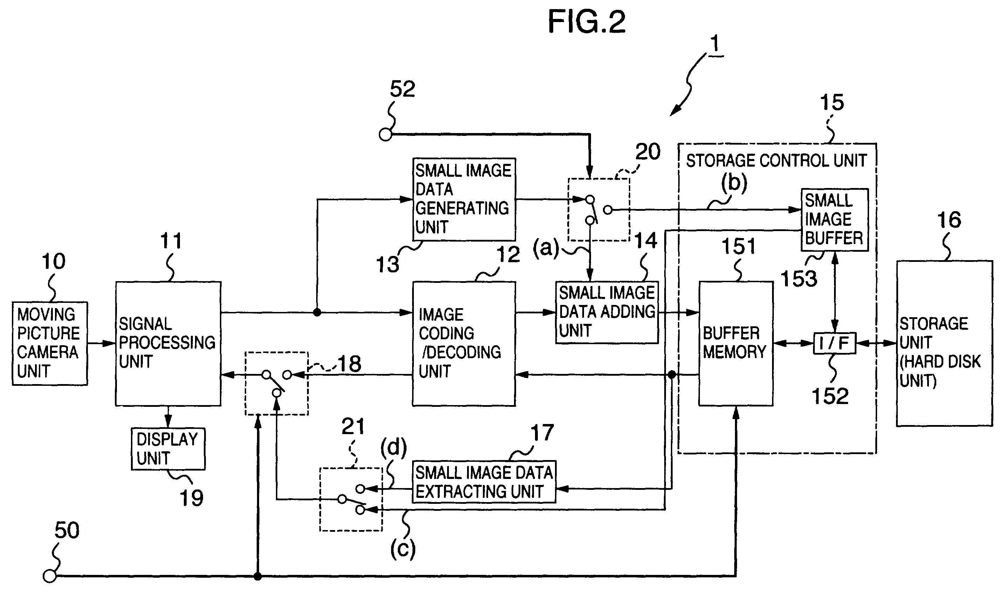

Next, a moving picture coding/decoding apparatus according to a second embodiment of the present invention will now be explained with reference to Fig. 2.

Fig. 2 is a schematic block diagram for representing the arrangement of this moving picture coding/decoding apparatus according to the second embodiment of the present invention.

The moving picture coding/decoding apparatus according to this second embodiment owns such a different structure that a change-over switch 20 used to record small image data, a selection switch 21 for the small image data, a buffer circuit 153 for the small image data, a selection signal 51 of the small image data, and a setting signal 52 used to record the small image data are additionally employed in combination with the entire arrangement of the above-explained moving picture coding/decoding apparatus according to the first embodiment shown in Fig. 1. Other arrangements and operations thereof in the second embodiment are identical to those of the first embodiment shown in Fig. 1.

Similar to the first embodiment, a picture (image) signal produced during the coding/decoding operation is stored into the hard disk unit 16 via the image coding/decoding unit 12, the signal adding unit 14, the buffer memory 151, and the interface unit 152.

A flow of small image data generated by the small image generating unit 13 is selected to be any one of data paths (a) and (b) by operating the switch 20 in response to the setting signal 52 set by the user.

In the case that the data patch (a) is selected, similar to the first embodiment shown in Fig. 1, the small image data is added to the coded data by the small image data adding unit 14.

In the case that the data path (b) is selected, the small image data is temporarily saved in the small image buffer circuit 153 of the storage control unit 15. At this time, no data is added to the coded data in the small image data adding unit 14 provided in the data path (a) which is not selected.

The small image buffer circuit 153 adds a flag to the small image data, and writes the small image data with this flag via the interface unit 152 into the hard disk unit 16. The flag indicates a relation between the small image data and the coded image data.

While the small image data is saved independent from the coded data, the relation between these small image data and coded data is given by the added flag.

When the decoding operation is carried out, the image data is propagated along a direction opposite to that when the coding operation is performed. The coded image data saved in the hard disk unit 16 is written via the interface unit 152 into the buffer memory 151, and thereafter, is decoded by the image coding/decoding unit 12 to produce an original image signal.

On the other hand, the small image data related to the coded image data is judged from the flag which is added to this small image data, and is read out from the small image buffer circuit 153 via the interface 152.

The change-over switch 21 for switching the output of the small image data may automatically select a data path (d) in the case that the small image data is added to the coded image data, and another data path (c) in such a case that both the coded image data and the small image data are saved in a separate form.

In the data bath (d), the small image data is penetrated which is extracted from the decoded data in an image data process operation similar to that of the first embodiment.

In the data path (c), the small image data saved in the small image buffer 153 is sequentially read out. A data flow after the change-over switch 21 is the same as that of the first embodiment.

With employment of the above-explained arrangement in the moving picture coding/decoding apparatus according to the second embodiment, such a selection can be made by operating the switch 20. That is, either the small image data is added to the coded image data or both the small image data and the coded image data are independently stored as separate files. This separate data storing function of the second embodiment may become advantageous in such a case that a total data amount of the decoded data itself is wanted to be suppressed, while the small image data and the coded image data are separately saved.

Also, since the small image data generating unit 13 is equipped with the image coding means, the small image data can be coded to save the coded small image data. Since both the small image buffer circuit 153 and the small image extracting unit 17 are provided with the image decoding means, the small image data which has been decoded during the reading operation can be decoded. As a result, the increase in the data amount can be suppressed.

Furthermore, in accordance with the present invention, a plurality of small image data about a moving picture may be combined with each other as one file, and one image file may be stored.

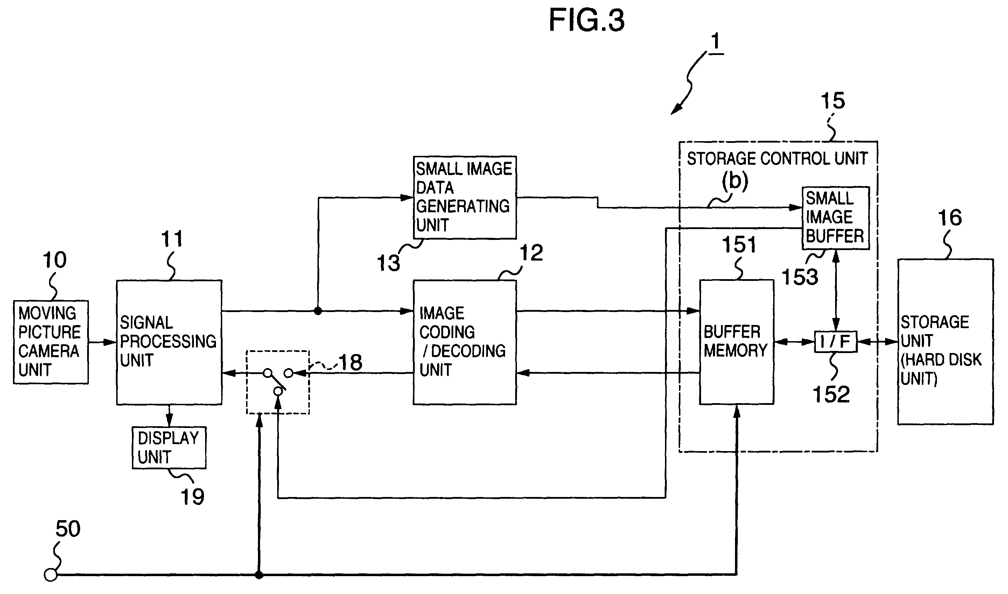

Next, a modification of the above-described moving picture coding/decoding apparatus according to the second embodiment will be explained with reference to Fig. 3.

The moving picture coding/decoding apparatus of this modification owns the following different point. That is to say, the small image data adding unit 14, the small image data extracting unit 17, the change-over switch 20 used to store the small image data, the selection switch 21 for selecting the small image data, and furthermore, the setting signal 52 used to store the small image data are eliminated from the entire arrangement of the moving picture coding/decoding apparatus according to the second embodiment shown in Fig. 2. The remaining arrangements and the operations thereof are substantially same as those of the moving picture coding/decoding apparatus according to the second embodiment.

A picture (image) signal produced during the coding/decoding operation is stored into the hard disk unit 16 via the image coding/decoding unit 12, the signal adding unit 14, the buffer memory 151, and the interface unit 152.

The small image data generated from the small image data generating unit 13 is temporarily saved in the small image buffer circuit 153.

The small image buffer circuit 153 adds a flag to the small image data, and writes the small image data with this flag via the interface unit 152 into the hard disk unit 16. The flag indicates a relation between the small image data and the coded image data.

While the small image data is saved independent from the coded data, the relation between these small image data and coded data is given by the added flag.

When the decoding operation is carried out, the image data is propagated along a direction opposite to that when the coding operation is performed. The coded image data saved in the hard disk unit 16 is written via the interface unit 152 into the buffer memory 151, and thereafter, is decoded by he image coding/decoding unit 12 to produce an original image signal. This original image signal is sent via the selecting switch 18 to the signal processing unit 11.

On the other hand, the small image data related to the coded image data is judged from the flag which is added to this small image data, and is read out from the small image buffer circuit 153 via the interface 152.

The small image data saved in the small image buffer circuit 153 are sequentially read out and thereafter, are sent via the selection switch 18 to the signal processing unit 11.

With employment of the above-explained arrangement, the coded image data itself and the small image data can be stored as the separate files. This may achieve a merit in the case that a total data amount of the coded data itself can be suppressed as many as possible.

Also, since the small image data generating unit 13 is equipped with the image coding means, the small image data can be coded to save the coded small image data. Since the small image buffer circuit 153 is provided with the image decoding means, the small image data which has been decoded during the reading operation can be decoded. As a result, the increase in the data amount can be suppressed.

Furthermore, in accordance with the present invention, a plurality of small image data about a moving picture may be combined with each other as one file, and one image file may be stored.

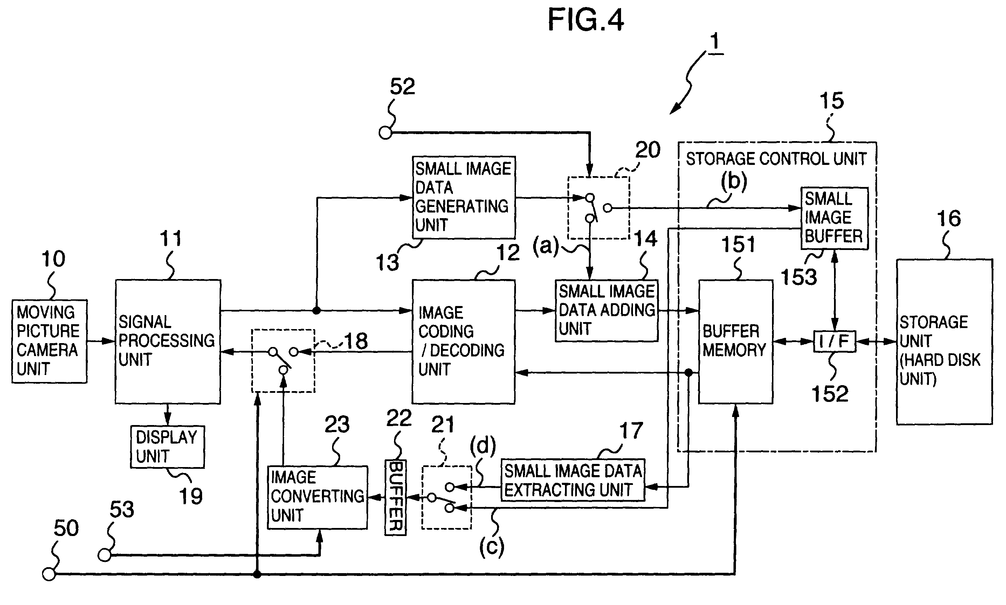

Referring now to Fig. 4, Fig. 5, and Fig. 6, a moving picture coding/decoding apparatus according to a third embodiment of the present invention will be described.

Fig. 4 is a schematic block diagram for representing an arrangement of the moving picture coding/decoding apparatus according to this third embodiment of the present invention.

This moving picture coding/decoding apparatus according to the third embodiment owns the following different point. That is, a buffer 22 for temporarily saving a plurality of small image data, an image converting unit 23 for converting an image size, and an output setting signal 53 which is externally set are additionally employed in combination with the moving picture coding/decoding apparatus according to the second embodiment, shown in Fig. 2. It should be noted that structures and operations of circuit blocks indicated by other reference numerals are identical to those of the moving picture coding/decoding apparatus according to the first and second embodiments, as indicated in Fig. 1 and Fig. 2.

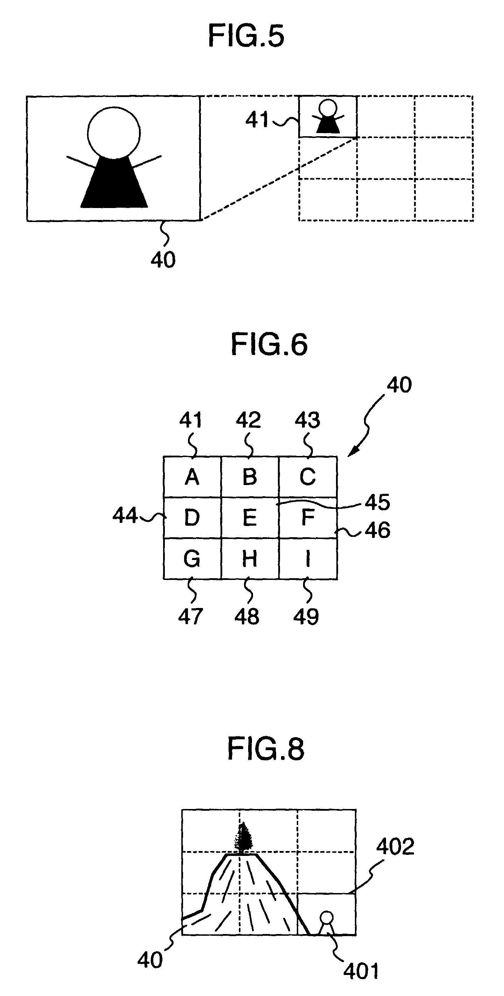

In this third embodiment, as indicated in Fig. 5, with respect to a dimension of an original image and a dimension of a small image, the small image 41 is reduced by 1/9 by the image converting unit 23, as compared with the original image 40.

As shown in Fig. 6, in accordance with this embodiment, plural sheets (9 sheets) of small images 41 to 49 can be expressed in the dimension of the original image 40.

An image coding operation is carried out with respect to both the original image data and the small image data in a similar manner to that of the second embodiment, whereas an image decoding operation is performed with respect to the original image data in a similar manner to that of the second embodiment.

An image coding operation for the small image data is carried out in a similar to the above-explained image coding operation executed up to the output of the switch 21.

Next, a small image data processing operation executed after the switch 21 will now be explained. A plurality of small image data outputted from the switch 21 are saved in the buffer 22.

The image converting unit 23 converts the saved small image data into one sheet of image data by changing the readout sequence. For instance, as indicated in Fig. 5, in the case that the dimension of the small image 41 is equal to 1/9 of the dimension of the original image 40, the buffer 22 saves the small image data until data about 9 sheets (namely 1 sheet of original image) of small images are saved.

At the time when the image data about 9 sheets of small images are saved in the buffer 22, as indicated in Fig. 6, the small image data are read out from this buffer 22 in the rearranged sequence in such a manner that an entire size of constituted small images becomes equal to the same size as a single sheet of an original image, and these small images are constituted from an upper left position to a lower right position in this order of the small images 41 to 49.

The image data after the small image data have been rearranged to constitute a single image is modulated to produce an original image (picture) signal by the signal processing unit 11, and then this modulated original image signal is supplied as either a still image or a moving picture to the display unit 19 until the output setting signal 53 set by the user is issued.

Since the above-described image data rearranging operation is carried out, a plurality of time divisional small images are displayed on one sheet of an image, so that even when an image scene is frequently changed, contents of images can be easily grasped.

In accordance with this embodiment, every time the original image is displayed, the small image data are not produced from the original coded image data, but the produced small image data are read out from the buffer to be rearranged. As a result, the waiting time until the original image is displayed can be shortened.

The image data about 9 sheets of next small images are read from the buffer by setting the output setting signal 53, and then are processed in a similar processing manner to that of the above-explained process operation. Accordingly, the small image data saved in the hard disk unit 16 can be sequentially displayed as either a still image or a moving picture every 9 sheets of small images.

Also, it may be set that in response to the mode change signal 50 set by the user, small image data of different coded image data is read into the buffer memory 151 every one image data. As a consequence, it is possible to display at the same time the small image data corresponding to the original images saved as a plurality of separate files.

At this case, if the respective small image data are continuously read out from the buffer memory by setting the output setting signal 53, then a plurality of small image data may be represented as a moving picture (namely, frame-skipped reproduction).

When a plurality of coded moving picture files of an original image are present in the hard disk 16, a plurality of small images for indicating an outline may be displayed as a moving picture without decoding/outputting each of these decoded moving pictures. As a consequence, the user can quickly find out the content of this moving picture.

Although the size of the small image is reduced by 1/9 of the size of the original image in this embodiment, this size may be arbitrarily set. For instance, the aspect ratio of the small image may be replaced by the aspect ratio of the original image.

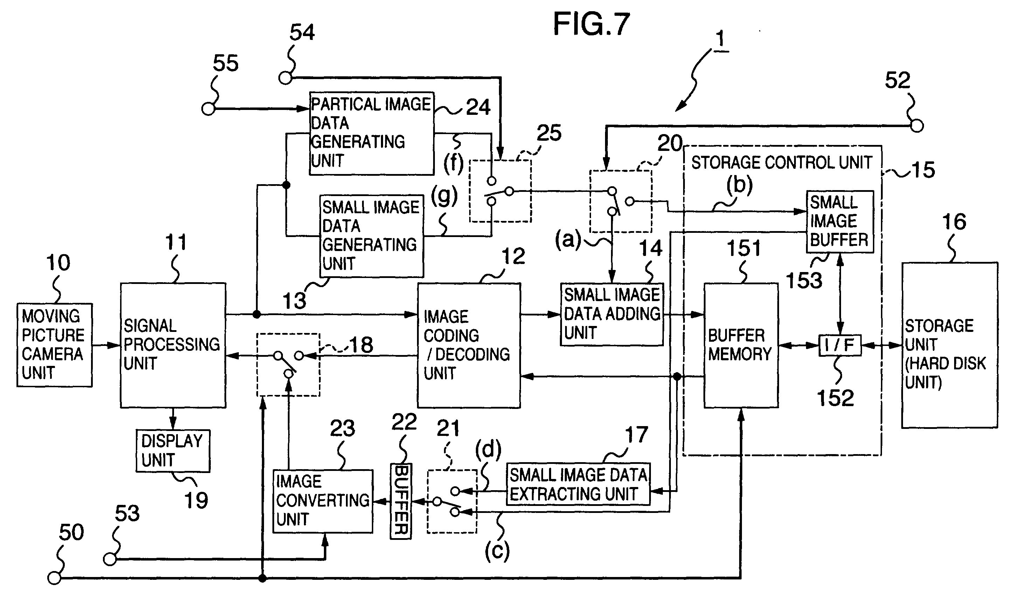

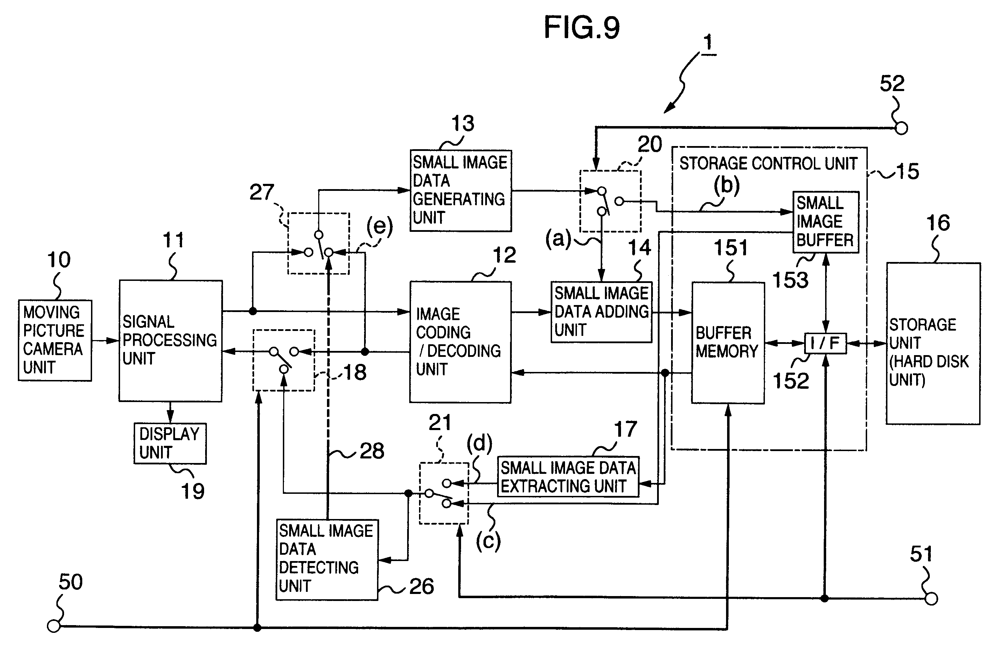

Referring now to Fig. 7, and Fig. 8, a moving picture coding/decoding apparatus according to a fourth embodiment of the present invention will be described.

Fig. 7 is a schematic block diagram for representing an arrangement of the moving picture coding/decoding apparatus according to this fourth embodiment of the present invention.

This moving picture coding/decoding apparatus according to the fourth embodiment owns the following different point. That is, a partial small image data generating unit 24, a small image mode change switch 25, a small image mode change signal 54 which is externally set, and a cut-out position selecting signal 55 which is externally set are additionally employed in combination with the moving picture coding/decoding apparatus according to the third embodiment.

It should be noted that structures and operations of circuit blocks indicated by other reference numerals are identical to those of the moving picture coding/decoding apparatus according to the first to third embodiments, as indicated in Fig. 1 to Fig. 4.

Fig. 8 illustratively shows an example of a photographed image. That is, a photographed person 401 is displayed within a subdivided screen 402 in an original display image 40.

The partial small image data generating unit 24 subdivides an original screen by a size (dimension) of a small image, cuts out an arbitrary screen portion designated by the cut-out position selecting signal 55, and then outputs the cut-out arbitrary screen portion as small image data. It is assumed that the cut-out position may be freely set by the user. The small image data generating unit 13 generates entire small image data indicative of an outline of the original image 40 to output this generated entire small image data.

While manipulating the switch 25 in response to the small image mode change signal 54 set by the user, a reduced resolution image (namely, image data outputted from small image data generating unit 13) and a partial image (namely, image data outputted from partial small image data generating unit 24) are switched to select one of these small image data. For instance, as indicated in Fig. 5, it is now assumed that a dimension of a small image is equal to 1/9 of an overall image size. In such a case of an input original image 40 that a person 401 is displayed in a small size at a lower right portion, and a background is displayed in a large size at other portions of Fig. 8, if the reduced resolution image having the full screen image is directly generated as a small screen image, then the person 401 located at the lower right portion is also reduced and therefore, can be hardly discriminated.

In this case, the display image is set by using the cut-out position selecting signal 55 in such a manner that the featured portion 401 of the person is displayed as a small image.

The partial small image data generating unit 24 subdivides the entire image into 9 subdivided images, and then outputs the set featured portion. In this case, a subdivided image 402 containing the person image 401 is outputted from the partial small image data generating unit 24.

When a data path (f) is selected by operating the switch 25, the small image data additionally provided with the coded image data is such data about a portion 402 of the set person.

Since the featured portion of such a complex image is cut out to produce the small image, the content of the moving picture can be intuitively grasped, as compared with such a case that the reduced resolution image of the original image are employed as the small image. When such an image is produced, the content of which can be sufficiently grasped by observing even such a reduced resolution image, since the switch 25 is operated to select a data path (g) in response to the small image mode switching signal 54, a similar process operation to that of the pervious embodiments can be selected.

In this third embodiment, the entire image is subdivided into 9 subdivided images when the small image is produced. Alternatively, the method for cutting out the image portion used as the small image may be realized by other cut-out methods. For example, a starting position of a small image may be designated by a user to be cut out.

Furthermore, the combined structure between either the partial small image data generating unit 24 or the generating unit 24, the small image data generating unit 13, and the switch 25 may be alternatively replaced by a small image data generating unit 13 employed in the above-described embodiment and the below-mentioned embodiment.

Referring now to Fig. 9, a moving picture coding/decoding apparatus according to a fifth embodiment of the present invention will be described.

Fig. 9 is a schematic block diagram for representing an arrangement of the moving picture coding/decoding apparatus according to this fifth embodiment of the present invention.

This moving picture coding/decoding apparatus according to the fifth embodiment owns the following different point. That is, a small image data detecting unit 26 for judging as to whether or not small image data is present, a switch 27 for controlling a flow of small image data, and a small image generation controlling signal 28 are additionally employed in combination with the moving picture coding/decoding apparatus according to the second embodiment, shown in Fig. 2. It should be noted that structures and operations of circuit blocks indicated by other reference numerals are identical to those of the moving picture coding/decoding apparatus according to the first to fourth embodiments, as indicated in Fig. 1 to Fig. 4.

In the case that such coded image data is saved in the hard disk unit 16, to which small image data is not added because this coded image data is produced by other apparatus than the moving picture coding/decoding apparatus of the present invention, otherwise such coded image data where there is no relevant small image data is saved in the hard disk 16, no data is penetrated in a demodulation path of the small image data when the decoding operation is carried.

When the data is not penetrated, the small image data detecting unit 26 judges that there is no small size data, the switch 27 is changed over to a data path (e) in response to the small image generation controlling signal 28, and then, the decoded (restored) original image signal is penetrated to a data path used to generate the small image data.

The moving picture coding/decoding apparatus is similarly operated after the small image data generating unit 13 in a similar manner to the generation of the small image data in the previous embodiments. In response to the setting signal 52, the switch 20 is set to a data path (b), and the small image data is saved as a separate file in the hard disk 16.

Also, since the switch 20 is changed over to a data path (a), the small image data may be added to the decoded image data, and the decoded data containing the small image data may be newly saved in the hard disk 16.

Since such an operation is performed, even such coded data containing no small image data is once decoded, so that the small image is newly produced and saved. Therefore, the small image can be displayed within short processing time after this small image data is twice generated.

Also, when either a duplication process operation or an edit process operation is executed as to saved moving picture data, if the small image data has been saved as the separate file as in the second embodiment, then there are some possibilities that an incoincidence may occur in a relationship between the coded image data which has been processed by the above duplication/edit process operation and the small image data. However, if the small image data is newly produced from the saved data by employing the means as described in this embodiment, then this difficulty can be solved.

It should be understood that as the input means of the moving pictures in all of the above-explained first to fifth embodiments, the photographing apparatus such as that CDD camera is employed. However, the present invention is not limited to this phtographying apparatus, but an image reproduced from a video disk and the like may be advantageously entered.

Also, the present invention may be advantageously applied to image coding systems other than the MPEG system. Also, the small image data may be generated by way of other image data generating methods. For instance, the small image data of the reduced resolution image may be generated by collecting DC components of DCT-converted blocks obtained while the coding process operation such as the MPEG system is carried out.

In accordance with the above-described embodiments, when the saving operation is carried out, either the reduced resolution image of the moving image data or an arbitrary partially-cut-out image is previously produced as the small image data, so that the moving picture or the still picture on the small image can be immediately reproduced in response to the request. Alternatively, a plurality of small images may be displayed on the screen. Therefore, the content of the moving picture data can be found out by merely executing the process operation with respect to the small image data having the small capacity.

Furthermore, when the image having no small image data is reproduced, since the small image data can be newly produced and saved, there is an effect that the small image can be displayed without employing the coding apparatus. The first-mentioned small image data is saved by another apparatus realized not based upon the inventive idea of the present invention.

## Claims

1. An apparatus capable of finding out a content of a picture signal containing recorded moving-picture information, comprising:
a small image data generating unit (13) for generating small image data from an original image signal containing moving-picture information, said small image data indexing said original image signal;
a first converting unit (12) for coding said original image signal to thereby convert said original image signal into a coded image signal;
means (14) coupled to both said small image data generating unit (13) and said first converting unit (12), for adding said small image data to said coded image signal so as to produce a small-image-data-contained coded image signal;
a storage unit (16);
a storage unit controlling unit (15) capable of controlling a storage position of said small-image-data-contained coded image signal with respect to said storage unit (16) to thereby said control unit;
an extracting unit (17) for extracting said small image data from the small-image-data-contained coded image signal which is read via said storage unit controlling unit (15) from said storage unit;
a second converting unit (12) for decoding said small-image-data-contained coded image signal read via said storage unit controlling unit (15) from said storage unit to thereby restore the original image signal; and
a selecting unit (18) for selecting one of said small image data extracted from said extracting unit (17) and said original image signal restored from said second converting unit (12).

2. An apparatus as claimed in claim 1 wherein:
said small image data generating unit (13) includes means for sampling said original image signal.

3. An apparatus as claimed in claim 1 wherein:
said small image data generating unit (24) includes means for cutting out a portion of an image formed from said original image signal.

4. An apparatus as claimed in claim 1 wherein:
said small image data generating unit includes means (13) for sampling said original image signal; means for cutting out a portion of an image formed from said original image signal; and a selecting unit (25) for selecting any one of said sampled original image signal from said sampling means (13) and said partial image cut out from said cutting means.

5. An apparatus as claimed in claim 1 wherein:
said small image data generating unit (13) includes coding means; and said extracting means (17) includes decoding means.

6. An apparatus capable of finding out a content of a picture signal containing recorded moving-picture information, comprising:
a small image data generating unit (13) for generating small image data from an original image signal containing moving-picture information, said small image data indexing said original image signal;
a first converting unit (12) for coding said original image signal to thereby convert said original image signal into a coded image signal;
a storage unit (16);
a storage unit controlling unit (15) coupled to both said small image data generating unit (13) and said first converting unit (12), for adding flag data to said small image data generated from said small image data generating unit (13) to thereby produce small image data with a flag, said flag data indicating a relationship between said small image data and an original image signal indexed by said small image data; and for controlling said storage unit (16) in such a manner that said small image data with the flag can be saved in said storage apparatus, and the coded image signal derived from said first converting unit (12) can be saved independent from said small image data in said storage unit (16);
a second converting unit (12) for decoding said small-image-data-contained coded image signal read from said storage unit via said storage unit controlling unit (15) from said storage unit to thereby restore the original image signal; and
a selecting unit (18) for selecting one of said small image data with the flag which is read via said storage unit controlling unit (15) from said storage unit (16) and the original image signal restored from said second converting unit (12).

7. An apparatus as claimed in claim 6 wherein:
said small image data generating unit (13) includes means for sampling said original image signal.

8. An apparatus as claimed in claim 6 wherein:
said small image data generating unit (24) includes means for cutting out a portion of an image formed from said original image signal.

9. An apparatus as claimed in claim 6 wherein:
said small image data generating unit includes means (13) for sampling said original image signal; means for cutting out a portion of an image formed from said original image signal; and a selecting unit (25) for selecting any one of said sampled original image signal from said sampling means (13) and said partial image cut out from said cutting means.

10. An apparatus as claimed in claim 6 wherein:
said small image data generating unit (13) includes coding means; and
said storage unit controlling unit (15) includes a small image buffer (153) equipped with decoding means, for temporarily storing the small image data generated by said small image data generating means (13), and further for temporarily storing the small image data with the flag data read from said storage unit (16).

11. An apparatus capable of finding out a content of a picture signal containing recorded moving-picture information, comprising:
a small image data generating unit (13) for generating small image data from an original image signal containing moving-picture information, said small image data indexing said original image signal;
a first converting unit (12) for coding said original image signal to thereby convert said original image signal into a coded image signal;
a first selecting unit (20) connect so as to receive the small image data from said small image data generating unit (13);
means (14) coupled to both said first converting unit (12) and said first selecting unit (20), for adding the small image data to said coded image signal outputted from said first converting unit (12), said small image data being selectively supplied via said first selecting unit (20) from said small image data generating unit (13);
a storage unit (16);
a storage unit controlling unit (15) coupled to both said small image data generating unit (13) and said first converting unit (12), for adding flag data to said small image data generated from said small image data generating unit (13) to thereby produce small image data with a flag, said flag data indicating a relationship between said small image data and an original image signal indexed by said small image data; and for controlling said storage unit (16) in such a manner that said small image data with the flag can be saved in said storage apparatus, and the coded image signal derived from said first converting unit (12) can be saved independent from said small image data in said storage unit (16); and also the storage position of said small-image-data-contained coded image signal into said storage unit (16) can be controlled;
an extracting unit (17) for extracting said small image data from the small-image-data-contained coded image signal which is read via said storage unit controlling unit (15) from said storage unit;
a second selecting unit (21) for selecting one of said small image data with the flag read out via said storage unit controlling unit (15) from said storage unit (16) and the small image data extracted from said extracting unit (17);
a second converting unit (12) for decoding said small-image-data-contained coded image signal read via said storage unit controlling unit (15) from said storage unit to thereby restore the original image signal; and
a third selecting unit (18) for receiving both the output from said second selecting unit (21) and the restored image signal from said second converting unit (12) and for selecting any one of said outputs.

12. An apparatus as claimed in claim 11 wherein:
said small image data generating unit (13) includes means for sampling said original image signal.

13. An apparatus as claimed in claim 11 wherein:
said small image data generating unit (24) includes means for cutting out a portion of an image formed from said original image signal.

14. An apparatus as claimed in claim 11 wherein:
said small image data generating unit includes means (13) for sampling said original image signal; means (24) for cutting out a portion of an image formed from said original image signal; and a selecting unit (25) for selecting any one of said sampled original image signal from said sampling means (13) and said partial image cut out from said cutting means.

15. An apparatus as claimed in claim 11, further comprising:
a memory (22) for saving thereinto a plurality of small image data derived from said second selecting unit (21); and
an image converting unit (23) connected between said memory and said third selecting unit, for converting image sizes of said plural small image data saved in said memory into a size of a single image produced by said original image signal.

16. An apparatus as claimed in claim 11 wherein:
said small image data generating unit (13) includes coding means; and said extracting means (17) includes decoding means.

17. An apparatus capable of finding out a content of a picture signal containing recorded moving-picture information, comprising:
a small image data generating unit (13) for generating small image data from an image signal containing moving-picture information, said small image data indexing said original image signal;
a first converting unit (12) for coding an original image signal containing moving-picture information to thereby convert said original image signal into a coded image signal;
a first selecting unit (20) connected so as to receive the small image data from said small image data generating unit (13);
means (14) coupled to both said first converting unit (12) and said first selecting unit (20), for adding the small image data to said coded image signal outputted from said first converting unit (12), said small image data being selectively supplied via said first selecting unit (20) from said small image data generating unit (13);
a storage unit (16);
a storage unit controlling unit (15) coupled to both said small-image-data-contained coded image signal (14) and said first converting unit (12), for adding flag data to said small image data generated from said small image data generating unit (13) to thereby produce small image data with a flag, said flag data indicating a relationship between said small image data and an original image signal indexed by said small image data; and for controlling said storage unit (16) in such a manner that said small image data with the flag can be saved in said storage apparatus, and the coded image signal derived from said first converting unit (12) can be saved independent from said small image data in said storage unit (16); and also the storage position of said small-image-data-contained coded image signal into said storage unit (16) can be controlled;
a second selecting unit (21) for selecting one of said small image data with the flag read out via said storage unit controlling unit (15) from said storage unit (16) and the small image data extracted from said extracting unit (17);
a second converting unit (12) for decoding said coded image signal read via said storage unit controlling unit (15) from said storage unit to thereby restore the image signal; and
a third selecting unit (27) for receiving both said original image signal and the restored image signal from said second converting unit (12) and for selecting any one of said outputs to thereby supply the selected signal as an image signal from which said small image data should be formed to said small image data generating unit (13);
a detecting unit (26) for receiving the output from said second selecting unit (21), and also for driving said third selecting unit (27) to select the image signal restored from said second converting unit (12) when said received output does not contain the small image data; and
a fourth selecting unit (18) for receiving both the output from said second selecting unit (21) and the image signal restored from said second converting unit (12), and for selecting any one of said two outputs.

18. A moving picture coding/decoding apparatus including image coding means (12) for coding an image signal of a moving picture to convert said image signal into coded image data, storage means (16) for storing thereinto said coded image data, and image decoding means (12) for decoding the coded image data stored in said storage means to produce the image signal to be outputted, said moving picture coding/decoding apparatus comprising:
small image generating means (13) including means for sampling a pixel, for generating small image data from the image signal of the moving picture when the image signal is coded with respect to each of images designated by a user;
adding means (14) for adding said small image data to the coded image data to thereby generate small-image-data-contained coded image data;
storage controlling means (15) for controlling a storage position of said small-image-data-contained coded image data within said storage means;
small image data extracting means (17) for extracting the small image data from said small-image-data-contained coded image data stored into said storage means when the image signal is decoded; and
output signal selecting means (18) in which one of said small image data and said decoded image data is selected by the user and the selected data is used as an output image signal.

19. A moving picture coding/decoding apparatus including image coding means (12) for coding an image signal of a moving picture to convert said image signal into coded image data, storage means (16) for storing thereinto said coded image data, and image decoding means (12) for decoding the coded image data stored in said storage means to produce the image signal to be outputted, said moving picture coding/decoding apparatus comprising:
small image generating means (13) including means for sampling a pixel, for generating small image data from the image signal of the moving picture when the image signal is coded with respect to each of images designated by a user;
storage controlling means (15) for adding flag data indicative of small image data of the decoded data to the small image data; and
output signal selecting means (18) in which one of said small image data and said decoded image data is selected by the user and the selected data is used as an output image signal when the image data is decoded.

20. A moving picture coding/decoding apparatus including image coding means (12) for coding an image signal of a moving picture to convert said image signal into coded image data, storage means (16) for storing thereinto said coded image data, and image decoding means (12) for decoding the coded image data stored in said storage means to produce the image signal to be outputted, said moving picture coding/decoding apparatus comprising:
small image generating means (13) including means for sampling a pixel, for generating small image data from the image signal of the moving picture when the image signal is coded with respect to each of images designated by a user;
adding means (14) for adding said small image data to the coded image data to thereby generate small-image-data-contained coded image data;
storage controlling means (15) for controlling a storage position of said small-image-data-contained coded image data within said storage means;
small image data extracting means (17) for extracting the small image data from said small-image-data-contained coded image data stored into said storage means when the image signal is decoded;
small image storage means (22) capable of saving a plurality of extracted small image data;
converting means (23) for converting said plurality of small image data saved in said small image storage means into a single image of an image signal; and
output signal selecting means (18) in which one of said single image of the image signal and said decoded image data is selected by the user and the selected data is used as an output image signal.

21. A moving picture coding/decoding apparatus as claimed in any one of the preceding claims 18 to 20 wherein:
said small image data generating means includes means (24) for cutting out a position on an image, which is set by a user, to output the cut image position as a small image.

22. A moving picture coding/decoding apparatus as claimed in any one of the preceding claims 18 to 21 wherein:
said small image data generating means has a function capable of coding the small image data; and said small image data extracting means has a function of decoding the small image data.

23. A moving picture coding/decoding apparatus as claimed in claims 20 wherein:
the small image data generated by said small image data generating means corresponds to a plurality of image data indicative of a time elapse of a moving picture; and said single image of the image signal converted by said converting means is constituted by said plurality of small image data representative of the time elapse of the moving picture.

24. A moving picture coding/decoding apparatus including storage means (16), and image decoding means (12) for decoding the coded image data stored in said storage means to produce the image signal to be outputted, said moving picture coding/decoding apparatus comprising:
output signal selecting means (18) operated in such that when small-image-data-contained decoded image data to which small image data is added is saved in said storage means (16), said output signal selecting means extracts the small image data from said small-image-data-contained decoded image data; and also operated in such that when both coded image data and small image data to which flag data is added are saved in said storage means, and said flag data indicates that said small image data corresponds to a small image of the coded image data, said output signal selecting means (18) reads out said small image data, and also a user selects any one of said extracted, or read small image data and decoded images data to output the selected data as an output image signal;
small image generating means (13, 14, 26, 27) operated in such that when neither the small-image-data-contained coded image data to which the small image is added, nor the small image data to which the flag data indicative of being equal to the small image of the coded image data is added is saved in said storage means, said small image generating means samples a pixel from a decoded image, or cuts out a position on an image designated by the user to thereby generate the small image data with respect to the image designated by the user; and
storage control means (15) for adding the flag data indicative of being equal to the small image of the coded data to said small image data, and for storing the small image data added with the flag data into said storage means.
